# EUROPEAN PATENT APPLICATION

(11) **EP 4 560 757 A1**
(43) Date of publication of application: **28.05.2025**
(21) Application number: 23917188.7
(22) Date of filing: 17.11.2023
(51) Int. Cl.: H01M 10/0525, H01M 10/0567, H01M 10/42

(54) **ELECTROLYTE FOR SECONDARY BATTERY, SECONDARY BATTERY, BATTERY MODULE, BATTERY PACK, AND ELECTRICAL DEVICE**

(30) Priority: 16.01.2023 CN 202310070491
(71) Applicant: Contemporary Amperex Technology Co., Limited, Ningde, Fujian 352100 (CN)
(72) Inventor: CHEN, Shigang, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); YAO, Shikang, Ningde, Fujian 352100 (CN); ZHOU, Qicheng, Ningde, Fujian 352100 (CN)
(74) Representative: Jacob, Reuben Ellis
(86) International application number: PCT/CN2023/132351
(87) International publication number: WO 2024/152720

(57) **Abstract**

The present application provides an electrolyte for a secondary battery, a secondary battery, a battery module, a battery pack, and an electrical device. The electrolyte for a secondary battery comprises an ester solvent and an additive, wherein the additive comprises one or more of an ionic liquid additive, an amide compound additive, an inert cationic additive, and an alloy additive. According to the present application, one or more of the ionic liquid additive, the amide compound additive, the inert cationic additive, and the alloy additive are added to the electrolyte comprising the ester solvent, so that the interface stability of the secondary battery is remarkably improved, the cycle performance and storage stability of the secondary battery are improved, and the gas production amount is reduced, thereby enhancing the overall safety of the secondary battery.

## Description

### TECHNICAL FIELD

This application relates to the field of secondary battery technologies, and in particular, to an electrolyte for secondary battery, a secondary battery, a battery module, a battery pack, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of secondary batteries, higher requirements are imposed on their energy density, cycling performance, and the like.

An electrolyte is a carrier for ion transport in a battery and conducts ions between positive and negative electrodes of the battery. As an important part of the battery, the electrolyte is a critical factor affecting the cycling performance, rate performance, safety, and the like of the battery. However, the existing electrolyte undergoes side reactions with a metal negative electrode and leads to the problem of instability in chemical and electrochemical properties due to its mismatch with a positive electrode material. Therefore, it is necessary to optimize the electrolyte to improve the overall performance of the battery.

### SUMMARY

This application has been made in view of the foregoing issues, with an objective to provide an electrolyte for secondary battery. One or more of an ionic liquid additive, an amide compound additive, an inert cation additive, and an alloy additive are added to an ester solvent to provide an electrolyte with stable chemical and electrochemical properties. A secondary battery prepared using the electrolyte has improved interface stability, cycling performance, and storage stability.

According to a first aspect of this application, an electrolyte for secondary battery is provided, including an ester solvent and an additive, where the additive includes one or more of an ionic liquid additive, an amide compound additive, an inert cation additive, and an alloy additive.

In any embodiment, cations of the ionic liquid additive include one or more of nitrogen-containing onium ions and phosphorus-containing onium ions, and anions of the ionic liquid additive include one or more of halogen ions, phosphate ions, borate ions, and sulfimide anions.

One or more of the ionic liquid additive, the amide compound additive, the inert cation additive, and the alloy additive are added to the electrolyte containing the ester solvent, so that the chemical and electrochemical stability of the electrolyte can be significantly enhanced, the cycling performance and storage stability of the secondary battery are improved, the amount of gas produced is reduced, and the overall safety of the secondary battery is improved.

In any embodiment, the cations of the ionic liquid additive include one or more of 1-butyl-3-methylimidazolium, 1-benzyl-3-methylimidazolium, 3-methyl-1-ethoxycarbonyl methylimidazolium, 1-alkyl-3-methylimidazolium, 1-[(trimethylsilyl)methyl]benzotriazolium, N-alkyl-N-methylpiperidinium, 5-azoniaspiro[4.4]nonane, trihexyl(tetradecyl)phosphonium ions, tetrabutylphosphonium ions, and N-butyl-N-methylpyrrolidinium; and optionally, the cations of the ionic liquid additive include tetrabutylphosphonium ions or N-butyl-N-methylpyrrolidinium.

In any embodiment, the anions of the ionic liquid additive include one or more of chloride ions, bromide ions, iodide ions, hexafluorophosphate, tetrafluoroborate, dicyanamide anions, bis(fluorosulfonyl)imide anions, and bis(trifluoromethylsulfonyl)imide anions; and optionally, the anions of the ionic liquid additive include hexafluorophosphate or bis(fluorosulfonyl)imide anions.

In any embodiment, the ionic liquid additive includes one or more of tetrabutylphosphonium hexafluorophosphate, tetrabutylphosphonium bis(fluorosulfonyl)imide, N-butyl-N-methylpyrrolidine hexafluorophosphate, N-butyl-N-methylpyrrolidine bis(fluorosulfonyl)imide, 1-butyl-3-methylimidazole bis(fluorosulfonyl)imide, 1-benzyl-3-methylimidazole bis(fluorosulfonyl)imide, 1-butyl-3-methylimidazole bis(trifluoromethylsulfonyl)imide, and 1-benzyl-3-methylimidazole bis(fluorosulfonyl)imide; and optionally, the ionic liquid additive includes tetrabutylphosphonium hexafluorophosphate, tetrabutylphosphonium bis(fluorosulfonyl)imide, N-butyl-N-methylpyrrolidine hexafluorophosphate, and N-butyl-N-methylpyrrolidine bis(fluorosulfonyl)imide.

The ionic liquid additive is added to the electrolyte containing the ester solvent, a solid electrolyte interface (SEI) film formed at a negative electrode can be reinforced, thereby reducing direct reactions between the negative electrode and ester solvent molecules or free radicals. In addition, the ionic liquid additive can also extrude solvent molecules at a double electric layer at an interface between the negative electrode and the electrolyte, which further reduces direct reactions between the negative electrode and the ester solvent molecules or free radicals, synergistically enhancing the stability of the interface between the negative electrode and the electrolyte, thereby improving the cycling performance and storage stability of the battery at room temperature and high temperatures.

In any embodiment, the amide compound additive includes one or more of compounds represented by formula I, formula II, or formula III, 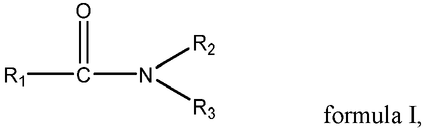 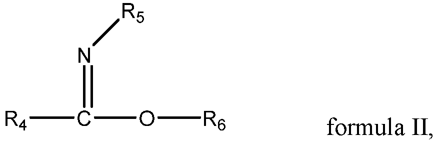 and 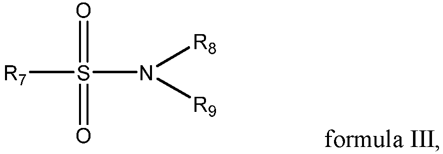 where R₁ to R₉ are each independently selected from hydrogen, silyl, keto carbonyl, C₁-C₃ alkyl unsubstituted or substituted with at least one fluorine atom, and aryl unsubstituted or substituted with at least one fluorine atom.

In any embodiment, the amide compound additive includes one or more of N,N-dimethylformamide, N,N-dimethylacetamide, N,N-dimethylacetoacetamide, 1,1,1-trifluoro-N,N-dimethylmethanesulfonamide, N,O-bis(trimethylsilyl)trifluoroacetamide, 2,3,6-trifluorobenzenesulfonamide, N,N-dimethyl-4-fluorobenzenesulfonamide, and N-methyl-N-trimethylsilane trifluoroacetamide.

When the amide compound additive is added to the electrolyte containing the ester solvent, the chemical and electrochemical stability of the battery can be enhanced, and the cycling performance and storage stability of the secondary battery can be significantly improved.

In any embodiment, the inert cation additive includes a salt with cations being alkali metal elements or alkaline earth metal elements.

In any embodiment, the inert cation additive includes one or more of lithium nitrate, lithium perchlorate, lithium hexafluorophosphate, lithium tetrafluoroborate, lithium bis(oxalato)borate, lithium difluoro(oxalato)borate, lithium bis(fluorosulfonyl)imide, lithium bis(trifluoromethanesulfonyl)imide, potassium hexafluorophosphate, potassium bis(oxalato)borate, potassium difluoro(oxalato)borate, potassium bis(fluorosulfonyl)imide, potassium bis(trifluoromethanesulfonyl)imide, cesium nitrate, cesium hexafluorophosphate, cesium bis(fluorosulfonyl)imide, cesium chloride, cesium bromide, calcium nitrate, strontium nitrate, and barium nitrate.

The inert cation additive is added to the electrolyte containing the ester solvent, so that the negative electrode interface stability of the battery can be enhanced, and the cycling performance and storage stability of the secondary battery can be improved.

In any embodiment, the alloy additive is a compound containing an element of group IVA or group VA.

In any embodiment, the alloy additive includes one or more of antimony trifluoride, antimony pentafluoride, tin difluoride, tin tetrafluoride, bismuth trichloride, and silicon dioxide, and fumed silica.

When the above alloy additive is added to the electrolyte containing the ester solvent, the stability of the SEI film can be enhanced, and the formation of dendrites at the negative electrode can be suppressed. This improves the cycling performance and storage stability of the secondary battery, reduces the amount of gas produced, and helps to improve the overall safety of the secondary battery.

In any embodiment, based on a total mass of the electrolyte, a mass percentage of the additive is 1%-10%.

When based on the total mass of the electrolyte, the mass percentage of the additive is 1%-10%, a stable SEI film can be formed at the interface between the negative electrode and the electrolyte, avoiding ion transport in the battery due to an excessive thickness of the SEI film, thereby improving the overall performance of the battery.

In any embodiment, the ester solvent includes one or more of a compound represented by formula IV and a compound represented by formula V, 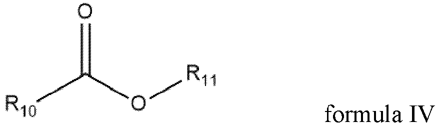 and 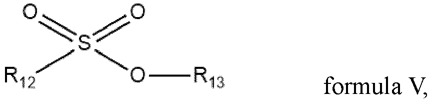 where R₁₀ is selected from hydrogen, alkenyl, substituted or unsubstituted C₁₋₆ alkyl, and substituted or unsubstituted C₁₋₆ alkoxy; R₁₁, R₁₂, and R₁₃ are each independently selected from hydrogen, alkenyl, and substituted or unsubstituted C₁₋₆ alkyl; R₁₀ and R₁₁ optionally form a 4, 5, or 6-membered ring with carbon and oxygen connected thereto, where the ring optionally includes a double bond, and hydrogen on the ring is optionally substituted with halogen or C₁₋₃ alkyl; and R₁₂ and R₁₃ optionally form a 4, 5, or 6-membered ring with sulfur and oxygen connected thereto.

In any embodiment, the ester solvent includes at least one of ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propanesultone, methyl propionate, methyl butyrate, ethyl acetate, ethyl propionate, propyl propionate, and ethyl butyrate.

In any embodiment, based on the total mass of the electrolyte, a mass percentage of the ester solvent is 20%-90%, optionally 40%-70%.

When based on the total mass of the electrolyte, the mass percentage of the ester solvent is 20%-90%, a stable SEI film can be formed at the interface between the negative electrode and the electrolyte, so that the chemical and electrochemical stability of the battery can be enhanced.

In any embodiment, the electrolyte includes a sodium salt, where the sodium salt includes one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide.

In any embodiment, based on the total mass of the electrolyte, a mass percentage of the sodium salt is 2%-70%, optionally 30%-60%.

When based on the total mass of the electrolyte, the mass percentage of the electrolytic salt is 2%-70%, a stable SEI film can be formed at the interface between the negative electrode and the electrolyte, so that the chemical and electrochemical stability of the battery is enhanced, and the cycling performance, storage stability, and safety of the battery are improved.

According to a second aspect of this application, a secondary battery is provided, including the electrolyte according to the first aspect.

In any embodiment, the secondary battery is a sodium metal battery.

In any embodiment, the secondary battery is a sodium metal battery with no negative electrode.

In any embodiment, the secondary battery includes a positive electrode plate, where the positive electrode plate includes a positive electrode active material, and the positive electrode active material includes one or more of a Prussian blue compound, a polyanionic compound, and a layered oxide.

In any embodiment, a surface of a particle of the positive electrode active material is provided with a coating layer, where the coating layer includes one or more of a carbon material (amorphous carbon, graphite, or graphene), polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

The coating layer on the surface of the particle of the positive electrode active material can avoid side reactions caused by direct contact between a surface of a positive electrode metal and the electrolyte, suppress dissolution of positive electrode transition metals, and enhance the electrode/electrolyte interface stability.

In any embodiment, a thickness of the coating layer is 2 nm-1000 nm.

The coating layer with an appropriate thickness can achieve an effective improvement effect, avoiding excessively high sheet resistance of the positive electrode and battery performance degradation due to the excessive thickness of the coating layer.

In any embodiment, the secondary battery includes a negative electrode plate, where the negative electrode plate includes a negative electrode current collector and a primer layer provided on at least one surface of the negative electrode current collector, and the primer layer includes one or more of carbon nanotubes, graphite, graphene, silver-carbon composite nanoparticles, and tin-carbon composite nanoparticles.

In any embodiment, the negative electrode current collector includes at least one of a metal foil, a metal foam current collector, a metal mesh current collector, a carbon felt current collector, a carbon cloth current collector, a carbon paper current collector, and a composite current collector.

In any embodiment, a surface density of the primer layer is 2 g/m²-50 g/m².

In any embodiment, a thickness of the primer layer is 1 µm-100 µm.

An appropriate primer layer can effectively guide the deposition at a negative electrode, reduce the formation of sodium dendrites at the negative electrode, and improve the uniformity of sodium metal deposition. In addition, the primer layer with an appropriate surface density and thickness can really make the absence of the negative electrode possible, improving the energy density and safety performance of the battery.

According to a third aspect of this application, a battery module is provided, including the secondary battery according to the second aspect.

According to a fourth aspect of this application, a battery pack is provided, including the secondary battery according to the second aspect or the battery module according to the third aspect.

According to a fifth aspect of this application, an electric apparatus is provided, including at least one of the secondary battery according to the second aspect, the battery module according to the third aspect, or the battery pack according to the fourth aspect.

### BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. cover plate.

### DESCRIPTION OF EMBODIMENTS

Embodiments that specifically disclose an electrolyte for secondary battery, a secondary battery, a battery module, a battery pack, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combinations of real numbers between a and b, where both a and b are real numbers. For example, a value range of "0-5" means that all real numbers in the range of "0-5" are listed herein, and "0-5" is just an abbreviated representation of a combination of these numbers. In addition, when a parameter is expressed as an integer greater than or equal to 2, it is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

An ester solvent is a solvent commonly used in a secondary battery electrolyte. However, an electrolyte containing the ester solvent is prone to reduction due to a narrow electrochemical stability window on a reduction side. This characteristic of high reducibleness and an insufficiently stable solid electrolyte interface (SEI) formed lead to continuous consumption of the electrolyte during cycling and seriously shortened cycle life of the electrolyte. In addition, the electrolyte containing the ester solvent undergoes direct side reactions with a metal electrode, and a solvation complex formed by an electrolytic salt dissolved exacerbates the side reactions. C-O fracture is typically used as a decomposition pathway between the electrolyte containing the ester solvent and sodium, and side reaction products are often flammable gases such as carbon monoxide. This causes severe deterioration in the safety of a metal battery.

### [Electrolyte for secondary battery]

In view of this, this application provides an electrolyte for secondary battery. The electrolyte for secondary battery includes an ester solvent and an additive, where the additive includes one or more of an ionic liquid additive, an amide compound additive, an inert cation additive, and an alloy additive.

In this specification, "ester solvent" refers to an organic solvent containing an ester group. It can be understood that the ester solvent may include any substituent group such as halogen.

In this specification, the term "additive" refers to a component with a small amount in the electrolyte, which may be gas, liquid, or solid. Conceptually, the difference between an additive, a main solvent, and an electrolytic salt lies only in their respective amounts in the electrolyte. Solvents or salts with small amounts may be collectively referred to as additives.

In this specification, the term "ionic liquid additive" refers to a salt with a small amount in the electrolyte, where the salt is composed entirely of cations and anions and present in a liquid state at room temperature or a temperature close to room temperature. Room temperature refers to 25°C±5°C.

In this specification, the term "amide compound additive" refers to a compound with a small amount in the electrolyte, having 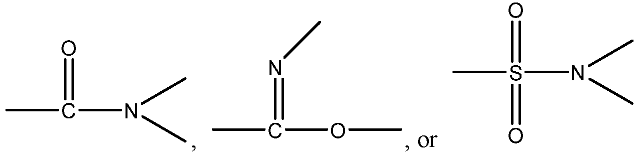 group.

In this specification, the term "inert cation additive" refers to a salt added to the electrolyte in a small amount and capable of ionizing cations. The cations are only adsorbed on a surface of an electrode but do not participate in the redox reaction of the electrode, and the cations can play a role in eliminating shuttle ions and free radicals that cause side reactions at a double-layer interface of the negative electrode.

In this specification, the term "alloy additive" refers to a compound with a small amount in the electrolyte, where the compound has an element capable of forming an alloy with metal cations in the electrolytic salt in the SEI film.

In some embodiments, the additive includes the ionic liquid additive. In some embodiments, the additive includes the amide compound additive. In some embodiments, the additive includes the inert cation additive. In some embodiments, the additive includes the alloy additive. In some embodiments, the additive is a mixture of the ionic liquid additive and the amide compound additive. In some embodiments, the additive is a mixture of the ionic liquid additive and the inert cation additive. In some embodiments, the additive is a mixture of the ionic liquid additive and the alloy additive. In some embodiments, the additive is a mixture of the amide compound additive and the alloy additive. In this application, one or more of the ionic liquid additive, the amide compound additive, the inert cation additive, and the alloy additive are added to the electrolyte containing the ester solvent, so that the side reactions between the metal negative electrode and the electrolytic salt as well as unstable solid electrolyte interface (SEI) films generated due to the side reactions can be suppressed, and thus the chemical and electrochemical stability of the electrolyte is significantly enhanced, the cycling performance and storage stability of the secondary battery are improved, and the safety of the secondary battery is improved.

In some embodiments, cations of the ionic liquid additive include one or more of nitrogen-containing onium ions and phosphorus-containing onium ions, and anions of the ionic liquid additive include one or more of halogen ions, phosphate ions, borate ions, and sulfimide anions. In some embodiments, the cations of the ionic liquid additive include one or more of 1-butyl-3-methylimidazolium ([Bmin]⁺), 1-benzyl-3-methylimidazolium ([Bzmin]⁺), 3-methyl-1-ethoxycarbonyl methylimidazolium ([Etmim]⁺), 1-alkyl-3-methylimidazolium ([Cnmim]⁺), 1-[(trimethylsilyl)methyl]benzotriazolium ([SiMBIM]⁺), N-alkyl-N-methylpiperidinium ([CnC1pip]⁺), 5-azoniaspiro[4.4]nonane ([AS[mn]]⁺), trihexyl(tetradecyl)phosphonium ions ([Tf2N]⁺), tetrabutylphosphonium ions ([Pnnnn]⁺), and N-butyl-N-methylpyrrolidinium ([Pyr₁₄]⁺); and optionally, the cations of the ionic liquid additive include tetrabutylphosphonium ions or N-butyl-N-methylpyrrolidinium.

In some embodiments, the anions of the ionic liquid additive include one or more of chloride ions ([Cl]⁻), bromide ions ([Br]⁻), iodide ions ([I]⁻), hexafluorophosphate ([PF₆]⁻), tetrafluoroborate ([BF₄]⁻), dicyanamide anions ([N(CN)₂]⁻), bis(fluorosulfonyl)imide anions ([FSI]⁻), and bis(trifluoromethylsulfonyl)imide anions ([TFSI]⁻); and optionally, the anions of the ionic liquid additive include hexafluorophosphate or bis(fluorosulfonyl)imide anions.

In some embodiments, the ionic liquid additive includes one or more of tetrabutylphosphonium hexafluorophosphate, tetrabutylphosphonium bis(fluorosulfonyl)imide, N-butyl-N-methylpyrrolidine hexafluorophosphate, N-butyl-N-methylpyrrolidine bis(fluorosulfonyl)imide, 1-butyl-3-methylimidazole bis(fluorosulfonyl)imide, 1-benzyl-3-methylimidazole bis(fluorosulfonyl)imide, 1-butyl-3-methylimidazole bis(trifluoromethylsulfonyl)imide, and 1-benzyl-3-methylimidazole bis(fluorosulfonyl)imide; and optionally, the ionic liquid additive includes tetrabutylphosphonium hexafluorophosphate, tetrabutylphosphonium bis(fluorosulfonyl)imide, N-butyl-N-methylpyrrolidine hexafluorophosphate, and N-butyl-N-methylpyrrolidine bis(fluorosulfonyl)imide.

The ionic liquid additive, especially ionic liquid containing bis(fluorosulfonyl)imide and bis(trifluoromethanesulfonyl)imide, is added to the ester solvent, an SEI film formed at a negative electrode can be reinforced, thereby reducing direct reactions between the negative electrode and ester solvent molecules or free radicals. In addition, the ionic liquid additive can also extrude solvent molecules at a double electric layer at an interface between the negative electrode and the electrolyte, which further reduces direct reactions between the negative electrode and the ester solvent molecules or free radicals, synergistically enhancing the stability of the interface between the negative electrode and the electrolyte, thereby improving the cycling performance and storage stability of the battery at room temperature and high temperatures.

In some embodiments, the amide compound additive includes one or more of compounds represented by formula I, formula II, or formula III, 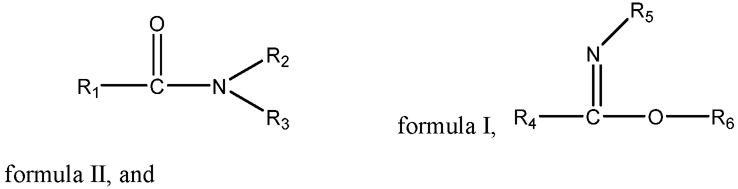 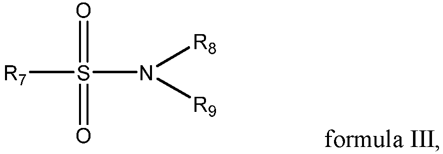 where R₁ to R₉ are each independently selected from hydrogen, silyl, keto carbonyl, C₁-C₃ alkyl unsubstituted or substituted with at least one fluorine atom, and aryl unsubstituted or substituted with at least one fluorine atom.

In this specification, the term "silyl" refers to a -Si(R₁₄)(R₁₅)(R₁₆) group, where R₁₄, R₁₅, and R₁₆ are each independently selected from hydrogen and substituted or unsubstituted C₁₋₃ alkyl. For example, silyl includes but is not limited to -SiH₃ and -Si(CH₃)₃.

In this specification, the term "keto carbonyl" refers to an -R-CO-R'-group, where both R and R' are hydrocarbyl groups.

In this specification, the term "aryl" refers to an aromatic ring system with at least one ring being aromatic, which includes but is not limited to phenyl, biphenyl, indanyl, 1-naphthyl, 2-naphthyl, and tetrahydronaphthyl.

In this specification, the term "C₁-C₃ alkyl" refers to a straight-chain or branched-chain hydrocarbon chain group including only carbon and hydrogen atoms, where the group has no unsaturation, has one to three carbon atoms, and is attached to the rest of a molecule through a single bond.

In this specification, the term "substituted" refers to that at least one hydrogen atom of the compound or chemical part is substituted with substituents of another chemical part, where the substituents are each independently selected from a group consisting of: hydroxyl, thiol, amino, cyano, nitro, aldehyde, halogen atoms, alkenyl, alkynyl, aryl, heteroaryl, C₁₋₆ alkyl, and C₁₋₆ alkoxy.

In some embodiments, the amide compound additive includes a sulfonamide compound represented by formula III.

In some embodiments, the amide compound additive includes one or more of N,N-dimethylformamide (DMF), N,N-dimethylacetamide (DMA), N,N-dimethylacetoacetamide (DMAA), 1,1,1-trifluoro-N,N-dimethylmethanesulfonamide (DMCF₃SA), N,O-bis(trimethylsilyl)trifluoroacetamide (BSTFA), 2,3,6-trifluorobenzenesulfonamide (TFBFSA), N,N-dimethyl-4-fluorobenzenesulfonamide (DMFBFSA), and N-methyl-N-trimethylsilane trifluoroacetamide (MSTFA).

When the amide compound additive is added to the ester solvent, the SEI film formed at the negative electrode contains inorganic nitrides. The presence of the inorganic nitrides enhances the film formation stability and the stability to oxygen, thereby significantly enhancing the chemical and electrochemical stability of the battery. In addition, some amide compound additives have Lewis basicity, can coordinate with Lewis acidic substances in the ester solvent, thereby preventing Lewis acidic components in the electrolyte from continuing to react with the negative electrode, further enhancing the negative electrode interface stability of the battery. Through the above effects, the amide compound additive can significantly improve the cycling performance and storage stability of secondary battery, especially the metal battery (including a battery with no negative electrode).

In some embodiments, the inert cation additive includes a salt with cations being alkali metal elements or alkaline earth metal elements.

In this specification, the alkali metal elements refer to metal elements of group IA in the periodic table of elements. In some embodiments, the inert cation additive includes lithium element, potassium element, or cesium element.

In this specification, the alkaline earth metal elements refer to elements of group IIA in the periodic table of elements. In some embodiments, the inert cation additive includes calcium element, strontium element, or barium element.

In some embodiments, the inert cation additive includes one or more of lithium nitrate (LiNO₃), lithium perchlorate (LiClO₄), lithium hexafluorophosphate (LiPF₆), lithium tetrafluoroborate (LiBF₄), lithium bis(oxalato)borate (LiBOB), lithium difluoro(oxalato)borate (LiDFOB), lithium bis(fluorosulfonyl)imide (LiFSI), lithium bis(trifluoromethanesulfonyl)imide (LiTFSI), potassium hexafluorophosphate (KPF₆), potassium bis(oxalato)borate (KBOB), potassium difluoro(oxalato)borate (KDFOB), potassium bis(fluorosulfonyl)imide (KFSI), potassium bis(trifluoromethanesulfonyl)imide (KTFSI), cesium nitrate (CsNO₃), cesium hexafluorophosphate (CsPF₆), cesium bis(fluorosulfonyl)imide (CsFSI), cesium chloride (CsCl), cesium bromide (CsBr), calcium nitrate (Ca(NO₃)₂), strontium nitrate (Sr(NO₃)₂), and barium nitrate (Ba(NO₃)₂).

The inert cation additive is added to the ester solvent, so that cations different from metal ions in the electrolytic salt can be introduced. The cations in the inert cation additive can not only eliminate some shuttle ions and free radicals causing side reactions through the double electric layer at the negative electrode interface, but also guide the uniform deposition and stripping of the metal ions from the electrolytic salt at the negative electrode. In addition, some anions contained in the inert cation additive can also increase inorganic components in the SEI film and stabilize the SEI film, thereby further enhancing the negative electrode interface stability of the battery, and improving the cycling performance and storage stability of the secondary battery, especially the metal battery (including a battery with no negative electrode).

In some embodiments, the alloy additive is a compound containing an element from group IVA or group VA.

In some embodiments, the alloy additive includes one or more of antimony trifluoride (SbF₃), antimony pentafluoride (SbF₅), tin difluoride (SnF₂), tin tetrafluoride (SnF₄), bismuth trichloride (BiCl₃), and silicon dioxide.

In some embodiments, silicon dioxide is fumed silica (F-SiO₂).

In this specification, the term "fumed silica (Fumed silica)", also known as fumed white carbon black, refers to an amorphous silicon dioxide nanoparticle.

When the above alloy additives are added to the electrolyte containing the ester solvent, two SEI films can be formed at the negative electrode. One SEI film is rich in alloy components formed by elements of group IVA or group VA together with sodium element. The other SEI film is rich in inorganic substances such as sodium fluoride. This can not only enhance the stability of the SEI film but also suppress the formation of dendrites at the negative electrode, thereby improving the cycling performance and storage stability of the secondary battery, reducing the amount of gas produced, and helping to improve the overall safety of the secondary battery.

In some embodiments, based on a total mass of the electrolyte, a mass percentage of the additive is 1%-10%.

In some embodiments, based on the total mass of the electrolyte, the mass percentage of the additive is optionally 1%, 2%, 3%, 4%, 5%, 6%, 7%, 8%, 9%, or 10%.

When based on the total mass of the electrolyte, the mass percentage of the additive is 1%-10%, a stable SEI film can be formed at the interface between the negative electrode and the electrolyte, avoiding ion transport in the battery due to an excessive thickness of the SEI film, thereby improving the overall performance of the battery.

In some embodiments, the ester solvent includes one or more of a compound represented by formula IV and a compound represented by formula V, 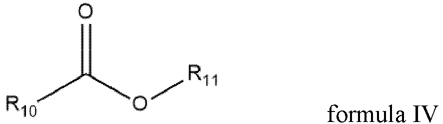 and 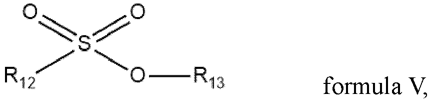 where R₁₀ is selected from hydrogen, alkenyl, substituted or unsubstituted C₁₋₆ alkyl, and substituted or unsubstituted C₁₋₆ alkoxy; R₁₁, R₁₂, and R₁₃ are each independently selected from hydrogen, alkenyl, and substituted or unsubstituted C₁₋₆ alkyl; R₁₀ and R₁₁ optionally form a cyclic structure with carbon and oxygen connected thereto, where the ring optionally includes a double bond, and hydrogen on the ring is optionally substituted with halogen or C₁₋₃ alkyl; and R₁₂ and R₁₃ optionally form a cyclic structure with sulfur and oxygen connected thereto.

In this specification, the term "C₁₋₆ alkyl" can be understood with reference to the definition of the term "C₁₋₃ alkyl".

In this specification, the term "alkenyl" refers to an unsaturated hydrocarbon group having at least one carbon-carbon double bond.

In this specification, the term "cyclic structure" refers to a structure in which atoms in a molecule are arranged in a ring. The number of rings in the cyclic structure is not limited. For example, the cyclic structure may be a 4-membered ring, a 5-membered ring, a 6-membered ring, or a 7-membered ring. For example, the formula IV forming the cyclic structure includes but is not limited to γ-butyrolactone. The formula V forming the cyclic structure includes but is not limited to 1,3-propanesultone (1,3-PS), 3-fluoro-1,3-propanesultone (FPS), 1-methyl-1,3-propanesultone (2,4-BS), 1,4-butanesultone (BS), 1,4-butenesultone (BST), and 1,3-propenesultone (PES).

In some embodiments, the ester solvent includes a sulfonate compound represented by formula V.

In some embodiments, the ester solvent includes at least one of ethylene carbonate (EC), propylene carbonate (PC), butylene carbonate (BC), vinylene carbonate (VC), fluoroethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), γ-butyrolactone (BL), 1,3-propanesultone (1,3-PS), methyl propionate (MP), methyl butyrate (MB), ethyl acetate (EA), ethyl propionate (EP), propyl propionate (PP), and ethyl butyrate (EB).

In some embodiments, based on the total mass of the electrolyte, a mass percentage of the ester solvent is 20%-90%.

In some embodiments, based on the total mass of the electrolyte, the mass percentage of the ester solvent is 40%-70%.

In some embodiments, based on the total mass of the electrolyte, the mass percentage of the ester solvent is optionally 20%, 25%, 30%, 35%, 40%, 45%, 50%, 55%, 60%, 65%, 70%, 75%, 80%, 85%, or 90%.

When the mass percentage of the ester solvent is 20%-90%, a stable SEI film can be formed at the interface between the negative electrode and the electrolyte, enhancing the chemical and electrochemical stability of the battery.

In some embodiments, the electrolyte includes a sodium salt, where the sodium salt includes sodium nitrate (NaNO₃), sodium perchlorate (NaClO₄), sodium hexafluorophosphate (NaPF₆), sodium tetrafluoroborate (NaBF₄), sodium tetrafluoroyttrate (NaYF₆), sodium hexafluoroarsenate (NaAsF₆), sodium acetate (CH₃COONa), sodium trifluoroacetate (CF₃COONa), sodium bis(oxalato)borate (NaBOB), sodium difluoro(oxalato)borate (NaDFOB), sodium tetraphenylborate (NaB(C₆H₅)₄), sodium trifluoromethanesulfonate (NaOTF), sodium bis(fluorosulfonyl)imide (NaFSI), sodium bis(trifluoromethanesulfonyl)imide (NaTFSI), and sodium (perfluorobutylsulfonyl)imide (NaFNFSI).

In some embodiments, based on the total mass of the electrolyte, a mass percentage of the sodium salt is 2%-70%, optionally 30%-60%.

In some embodiments, based on the total mass of the electrolyte, the mass percentage of the sodium salt is optionally 2%, 5%, 10%, 15%, 20%, 25%, 30%, 35%, 40%, 45%, 50%, 55%, 60%, 65%, or 70%.

When based on the total mass of the electrolyte, the mass percentage of the sodium salt is 2%-70%, the electrolyte provided in this application can effectively improve the chemical and electrochemical stability, cycling performance, and storage stability of the battery. When based on the total mass of the electrolyte, the mass percentage of the sodium salt is 20%-70%, a high-concentration electrolytic salt can further reduce free solvent molecules in the solvent, reduce side reactions between the solvent and the negative electrode, and improve the cycling performance, storage stability, and safety of the battery.

### [Secondary battery]

In some embodiments, the secondary battery includes the above electrolyte.

In some embodiments, the secondary battery is a sodium metal battery.

A sodium metal battery refers to a battery with a negative electrode containing sodium metal.

In some embodiments, the secondary battery is a sodium metal battery with no negative electrode. The sodium metal battery with no negative electrode uses no negative electrode active material and just uses a negative electrode current collector as a negative electrode. During an initial charging process, sodium is plated on the negative electrode and returns to a positive electrode during charging, thereby achieving a charge and discharge cycle. Since no negative electrode material is used and only the negative electrode current collector is used, the battery with no negative electrode can effectively overcome the defects of the sodium metal battery, allowing for a higher energy density than a sodium metal negative electrode.

In some embodiments, a CB value of the sodium metal battery with no negative electrode is less than or equal to 0.1. The CB value is obtained by dividing a capacity per unit area of a negative electrode plate by a capacity per unit area of a positive electrode plate in the secondary battery. Since the sodium metal battery with no negative electrode contains no negative electrode active material, the negative electrode plate has a small capacity per unit area, and the CB value of the sodium secondary battery is less than or equal to 0.1.

The ester solvent has a large value of a highest occupied molecular orbital (HOMO), so that after the electrolytic salt is dissolved in the ester solvent, the electrolyte has a higher potential on an oxidation side of the electrochemical stability window. However, when the ester solvent is collocated with a positive electrode active material, especially a layered oxide with a high energy density and high operating potential, the ester solvent still has the problem of chemical and electrochemical stability. In this application, one or more of the ionic liquid additive, the amide compound additive, the inert cation additive, and the alloy additive are added to the ester solvent, so that a stable SEI film can be formed at an electrode/electrolyte interface, reducing side reactions due to direct reactions between electrode metal and the ester solvent molecules or free radicals in the electrolyte, thereby improving the cycling performance, storage stability, and safety of the sodium battery with no negative electrode.

In some embodiments, the secondary battery includes a positive electrode plate, where the positive electrode plate includes a positive electrode active material, and the positive electrode active material includes one or more of a Prussian blue compound, a polyanionic compound, and a layered oxide.

The layered oxide is optionally a layered transition metal oxide, where a transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M is one or more of Ti, V, Mn, Co, Ni, Fe, Cr, and Cu, and 0 < x ≤ 1.

The polyanionic compound may be a type of compound having metal ions, transition metal ions, and tetrahedral (YO₄)ⁿ⁻ anionic units. The metal ions are optionally one of sodium ions, lithium ions, potassium ions, and zinc ions; the transition metal is optionally at least one of Mn, Fe, Ni, Co, Cr, Cu, Ti, Zn, V, Zr, and Ce; Y is optionally at least one of P, S, and Si; and n represents the valence state of (YO₄)ⁿ⁻.

The Prussian blue compound may be a type of compound having sodium ions, transition metal ions, and cyanogen ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

In some embodiments, the positive electrode active material includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

The sodium metal battery with no negative electrode exhibits good cycling performance in an ether electrolyte, and especially has excellent cycling performance when collocated with a polyanionic positive electrode including sodium vanadium phosphate (Na₃V₂(PO₄)₃) and sodium iron pyrophosphate (Na₄Fe₃(PO₄)₂P₂O₇). Although the layered oxide has a higher energy density, the layered oxide has poor compatibility with electrolytes in the prior art and the problems such as poor cycling performance. The electrolyte provided in this application is collocated with the layered oxide, so that the cycle life of the electrolyte can be effectively prolonged.

In some embodiments, a surface of a particle of the positive electrode active material is provided with a coating layer, where the coating layer includes one or more of a carbon material, polyaniline (PANI), polypyrrole (PPy), poly(3,4-ethylenedioxythiophene) (PEDOT), aluminum oxide (Al₂O₃), zinc oxide (ZnO), titanium oxide (TiO₂), zirconium oxide (ZrO₂), magnesium oxide (MgO), silicon oxide (SiO₂), lanthanum oxide (La₂O₃), sodium fluoride (NaF), lithium fluoride (LiF), and aluminum fluoride (AlF₃). The carbon material includes one or more of amorphous carbon, graphite, or graphene.

The coating of the coating layer can effectively enhance the stability of the positive electrode active material, reduce metal dissolution and particle fracture of the positive electrode active material during the cycling process, and effectively improve the cycling performance and storage stability of the battery.

In some embodiments, a thickness of the coating layer is 2 nm-1000 nm.

In some embodiments, the thickness of the coating layer is optionally 2 nm, 5 nm, 10 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, or 1000 nm.

The coating layer with an appropriate thickness can achieve an effective improvement effect, avoiding excessively high sheet resistance of the positive electrode and battery performance degradation due to the excessive thickness of the coating layer.

In some embodiments, the secondary battery includes a negative electrode plate, where the negative electrode plate includes a negative electrode current collector and a primer layer provided on at least one surface of the negative electrode current collector, and the primer layer includes one or more of carbon nanotubes, graphite, graphene, silver-carbon composite nanoparticles, and tin-carbon composite nanoparticles.

In some embodiments, a surface density of the primer layer is 2 g/m²-50 g/m².

In some embodiments, the thickness of the primer layer is 1 µm-100 µm.

The primer layer within the above range can effectively guide the deposition at a negative electrode, reduce the formation of sodium dendrites at the negative electrode, and improve the uniformity of sodium metal deposition. In addition, the primer layer with an appropriate surface density and thickness can really make the absence of the negative electrode possible, improving the energy density and safety performance of the battery.

In some embodiments, the current collector of the sodium metal battery with no negative electrode includes at least one of a metal foil, a metal foam current collector, a metal mesh current collector, a carbon felt current collector, a carbon cloth current collector, a carbon paper current collector, and a composite current collector.

In some embodiments, the metal foil is optionally a copper foil, an aluminum foil, a stainless steel foil, or a titanium foil; and the metal foam current collector is optionally copper foam, aluminum foam, or nickel foam. The metal mesh current collector is optionally a copper mesh, an aluminum mesh, or a stainless steel mesh. The composite current collector includes a current collector with a primer layer or a current collector with a polymer base film. The composite current collector may have a "sandwich" structure, with a polymer base film in the middle and metal foil on two sides. The composite current collector may alternatively be a current collector with metal foil on one side of a polymer base film. The polymer base film is optionally one of polyamide, polyethylene terephthalate, polyimide, polyethylene, polypropylene, polystyrene, polyvinyl chloride, acrylonitrile-butadiene-styrene copolymer, polybutylene terephthalate, poly(p-phenylene terephthalamide), polypropylene, polyoxymethylene, epoxy resin, phenolic resin, polytetrafluoroethylene, polyvinylidene fluoride, silicone rubber, and polycarbonate. In some embodiments, the secondary battery may include an outer package. The outer package may be used for packaging an electrode assembly and an electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, which, for example, may be polypropylene, polybutylene terephthalate, and polybutylene succinate.

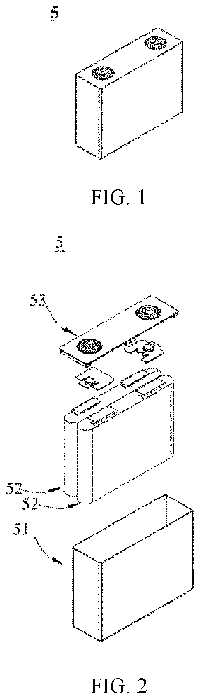

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices based on specific actual requirements.

In some embodiments, secondary batteries may be assembled into a battery module, and the battery module may include one or more secondary batteries. The specific quantity may be chosen by persons skilled in the art based on use and capacity of the battery module.

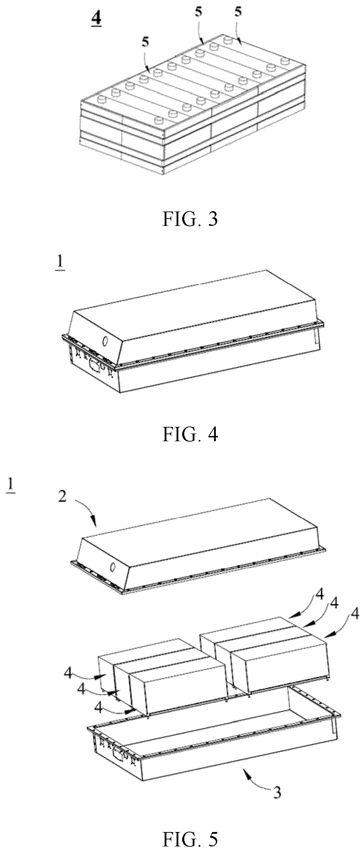

FIG. 3 shows a battery module 4 as an example. Referring to FIG. 3, in the battery module 4, a plurality of secondary batteries 5 may be sequentially arranged along a length direction of the battery module 4. Certainly, the secondary batteries may alternatively be arranged in any other manners. Further, the plurality of secondary batteries 5 may be fixed by fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

For the electric apparatus, a secondary battery, a battery module, or a battery pack may be selected according to requirements for using the electric apparatus.

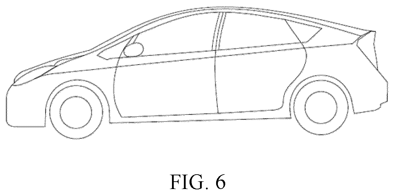

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of a secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation method

### Example 1

### 1. Preparation of positive electrode plate

A positive electrode active material carbon-coated sodium iron pyrophosphate (Na₄Fe₃(PO₄)₂P₂O₇/C), a binder polyvinylidene fluoride (PVDF), and a conductive agent conductive carbon black (Super-P) were mixed well at a mass ratio of 96%:2%:2% in an N-methylpyrrolidone (NMP) solvent to prepare a positive electrode slurry. The positive electrode slurry was applied on a surface of an aluminum foil using an extrusion coater according to the requirement of the mass per unit area of the positive electrode active material, and then drying was performed. An electrode plate coated with the positive electrode slurry was subjected to cold pressing at a designed pressing density of 2.5 g/cm³ using a cold press to obtain a final positive electrode plate.

### 2. Preparation of negative electrode plate

Carbon nanotubes and sodium carboxymethyl cellulose were added to water at a mass ratio of 1:2 and stirred to form a uniform slurry. The slurry was applied on a negative electrode current collector and dried to form a primer layer. After drying and cutting were performed, a negative electrode plate with no negative electrode structure was obtained, where a surface density of the primer layer was 10 g/m².

### 3. Separator

A polyethylene film (PE separator) was used as a separator.

### 4. Preparation of electrolyte

In an argon atmosphere glove box (H₂O < 0.1 ppm, O₂ < 0.1 ppm), diethyl carbonate and ethyl methyl carbonate were mixed at a volume ratio of 1:1, and sodium hexafluorophosphate was dissolved in the ester mixture solvent, and N-butyl-N-methylpyrrolidine-hexafluorophosphate was added to the prepared solution, so that a mass of sodium hexafluorophosphate accounted for 20% of a total mass of an electrolyte, and a mass of N-butyl-N-methylpyrrolidine-hexafluorophosphate accounted for 5% of the total mass of the electrolyte, to obtain an electrolyte of Example 1.

### 5. Preparation of battery

The positive electrode plate, the separator, and the negative electrode plate were sequentially stacked so that the separator was located between the positive and negative electrode plates for separation, the foregoing electrolyte was added, and a button battery was assembled.

Specific parameters were shown in Table 1.

In Examples 2 to 23, constituents of the electrolyte for secondary battery were adjusted, and specific parameters were shown in Table 1. In Examples 10 to 13, the solvent in the electrolyte included diethyl carbonate and fluoroethylene carbonate, with a volume ratio of 2:1. In Example 23, the mass percentage of sodium bis(trifluoromethanesulfonyl)imide in the electrolyte was 50%, and the mass percentage of sodium hexafluorophosphate in the electrolyte was 20%.

In Examples 24 to 27, the positive electrode active materials were Na[Cu_{1/9}Ni_{2/9}Fe_{1/3}Mn_{1/3}]O₂, and specific parameters of other components were shown in Table 1.

In Examples 28 to 31, the positive electrode active materials were ZrO₂-coated Na_{2/3}Ni_{1/6}Mn_{2/3}Cu_{1/9}Mg_{1/18}O₂ (with a thickness of a ZrO₂ coating layer being 30 nm), and specific parameters of other components were shown in Table 1.

In Comparative examples 1 to 10, electrolyte components or positive electrode active materials of the secondary batteries were adjusted, and the specific parameters were shown in Table 1. Preparation methods were basically the same as those of Example 1. In Comparative example 2, the volume ratio of diethyl carbonate to fluoroethylene carbonate was 2: 1. In Comparative example 8, the mass percentage of sodium bis(trifluoromethanesulfonyl)imide in the electrolyte was 50%, and the mass percentage of sodium hexafluorophosphate in the electrolyte was 20%.

### II. Battery performance test

### (1) Test of electrochemical stability window

An electrochemical workstation was used to test the window of the electrolyte, with a test voltage range of 1.0 V to 5.0 V and a scanning speed of 0.1 mV/s. The electrochemical stability window of the electrolyte was determined based on a starting position of a peak potential in a CV curve. All cyclic voltammetry (CV) tests in the experiment were completed on the 1470 multi-channel electrochemical workstation of Solartron, UK.

### (2) Room-temperature/high-temperature cycling performance

At 25°C/60°C and normal pressure (0.1 MPa), the battery was charged at a constant current of 0.1C to a voltage of 4 V (at a layered oxide positive electrode) or 3.7 V (at a sodium iron pyrophosphate positive electrode), and then discharged at a constant current of 0.1C to a voltage of 3.0 V. This process was the first charge and discharge cycle. Then, the battery was charged at a constant current of 1C to a voltage of 4 V/3.7 V, and then discharged at a constant current of 1C to a voltage of 3.0 V. A first discharge capacity was denoted as 100%, and the number of cycles until the discharge capacity was 80% was recorded.

### (3) Room-temperature/high-temperature storage performance

At 25°C/60°C, the prepared full battery was left standing for 30 minutes, charged at a constant current of 0.1C to 4 V (at a layered oxide positive electrode) or 3.7 V (at a sodium iron pyrophosphate positive electrode), then charged at a constant voltage of 4 V to 0.01C, and then left standing for 5 minutes. The thickness of the full battery was measured. After the full battery had been stored at 25°C/60°C for 60 days, the thickness of the full battery was measured. A thickness swelling rate of the battery was calculated using the following formula: thickness swelling rate of the full battery = [(thickness after storage - thickness before storage)/thickness before storage] × 100%. The test processes in comparative examples and other examples were the same as above.

### III. Analysis for test results of examples and comparative examples

Batteries in examples and comparative examples were respectively prepared according to the foregoing methods, and various performance parameters were measured. Results were shown in the Table 1 and Table 2 below.

**Table 1**

| No. | Positive electrode active material | Sodium salt | Mass percentage | Solvent | Mass percentage | Additive | Mass percentage |
|---|---|---|---|---|---|---|---|
| Example 1 | Carbon-coated sodium iron pyrophosphate | Sodium hexafluorophosphate | 20% | Diethyl carbonate + ethyl methyl carbonate (volume ratio of 1:1) | 75% | N-butyl-N-methylpyrrolidine hexafluorophosphate | 5% |
| Example 2 | Carbon-coated sodium iron pyrophosphate | Sodium hexafluorophosphate | 20% | Diethyl carbonate + ethyl methyl carbonate (volume ratio of 1:1) | 75% | N-butyl-N-methylpyrrolidine bis(fluorosulfonyl)imide | 5% |
| Example 3 | Carbon-coated sodium iron pyrophosphate | Sodium hexafluorophosphate | 20% | Diethyl carbonate + ethyl methyl carbonate (volume ratio of 1:1) | 75% | Tetrabutylphosphonium hexafluorophosphate | 5% |
| Example 4 | Carbon-coated sodium iron pyrophosphate | Sodium hexafluorophosphate | 20% | Diethyl carbonate + ethyl methyl carbonate (volume ratio of 1:1) | 75% | Tetrabutylphosphonium bis(fluorosulfonyl)imide | 5% |
| Example 5 | Carbon-coated sodium iron pyrophosphate | Sodium hexafluorophosphate | 20% | Diethyl carbonate + ethyl methyl carbonate (volume ratio of 1:1) | 75% | N,N-dimethylacetamide | 5% |
| Example 6 | Carbon-coated sodium iron pyrophosphate | Sodium hexafluorophosphate | 20% | Diethyl carbonate + ethyl methyl carbonate (volume ratio of 1:1) | 75% | Lithium bis(oxalato)borate | 5% |
| Example 7 | Carbon-coated sodium iron pyrophosphate | Sodium hexafluorophosphate | 20% | Diethyl carbonate + ethyl methyl carbonate (volume ratio of 1:1) | 75% | Lithium bis(trifluoromethanesulfonyl)imide | 5% |
| Example 8 | Carbon-coated sodium iron pyrophosphate | Sodium hexafluorophosphate | 20% | Diethyl carbonate + ethyl methyl carbonate (volume ratio of 1:1) | 75% | Potassium bis(oxalato)borate | 5% |
| Example 9 | Carbon-coated sodium iron pyrophosphate | Sodium hexafluorophosphate | 20% | Diethyl carbonate + ethyl methyl carbonate (volume ratio of 1:1) | 75% | Antimony trifluoride | 5% |
| Example 10 | Carbon-coated sodium iron pyrophosphate | Sodium hexafluorophosphate | 20% | Diethyl carbonate + fluoroethylene carbonate (volume ratio of 2:1) | 75% | N-butyl-N-methylpyrrolidine hexafluorophosphate | 5% |
| Example 11 | Carbon-coated sodium iron pyrophosphate | Sodium hexafluorophosphate | 20% | Diethyl carbonate + fluoroethylene carbonate (volume ratio of 2:1) | 75% | N,N-dimethylacetamide | 5% |
| Example 12 | Carbon-coated sodium iron pyrophosphate | Sodium hexafluorophosphate | 20% | Diethyl carbonate + fluoroethylene carbonate (volume ratio of 2:1) | 75% | Potassium bis(oxalato)borate | 5% |
| Example 13 | Carbon-coated sodium iron pyrophosphate | Sodium hexafluorophosphate | 20% | Diethyl carbonate + fluoroethylene carbonate (volume ratio of 2:1) | 75% | Antimony trifluoride | 5% |
| Example 14 | Carbon-coated sodium iron pyrophosphate | Sodium bis(trifluoromethanesulfonyl)imide | 20% | Diethyl carbonate + ethyl methyl carbonate (volume ratio of 1:1) | 75% | N-butyl-N-methylpyrrolidine hexafluorophosphate | 5% |
| Example 15 | Carbon-coated sodium iron pyrophosphate | Sodium bis(fluorosulfonyl)imide | 20% | Diethyl carbonate + ethyl methyl carbonate (volume ratio of 1:1) | 75% | N-butyl-N-methylpyrrolidine hexafluorophosphate | 5% |
| Example 16 | Carbon-coated sodium iron pyrophosphate | Sodium hexafluorophosphate | 20% | Diethyl carbonate + ethyl methyl carbonate (volume ratio of 1:1) | 79% | N-butyl-N-methylpyrrolidine hexafluorophosphate | 1% |
| Example 17 | Carbon-coated sodium iron pyrophosphate | Sodium hexafluorophosphate | 20% | Diethyl carbonate + ethyl methyl carbonate (volume ratio of 1:1) | 77% | N-butyl-N-methylpyrrolidine hexafluorophosphate | 3% |
| Example 18 | Carbon-coated sodium iron pyrophosphate | Sodium hexafluorophosphate | 20% | Diethyl carbonate + ethyl methyl carbonate (volume ratio of 1:1) | 72% | N-butyl-N-methylpyrrolidine hexafluorophosphate | 8% |
| Example 19 | Carbon-coated sodium iron pyrophosphate | Sodium hexafluorophosphate | 20% | Diethyl carbonate + ethyl methyl carbonate (volume ratio of 1:1) | 70% | N-butyl-N-methylpyrrolidine hexafluorophosphate | 10% |
| Example 20 | Carbon-coated sodium iron pyrophosphate | Sodium hexafluorophosphate | 2% | Diethyl carbonate + ethyl methyl carbonate (volume ratio of 1:1) | 93% | N-butyl-N-methylpyrrolidine hexafluorophosphate | 5% |
| Example 21 | Carbon-coated sodium iron pyrophosphate | Sodium hexafluorophosphate | 30% | Diethyl carbonate + ethyl methyl carbonate (volume ratio of 1:1) | 65% | N-butyl-N-methylpyrrolidine hexafluorophosphate | 5% |
| Example 22 | Carbon-coated sodium iron pyrophosphate | Sodium bis(trifluoromethanesulfonyl)imide | 50% | Diethyl carbonate + ethyl methyl carbonate (volume ratio of 1:1) | 45% | N-butyl-N-methylpyrrolidine hexafluorophosphate | 5% |
| Example 23 | Carbon-coated sodium iron pyrophosphate | Sodium bis(trifluoromethanesulfonyl)imide + sodium hexafluorophosphate (mass ratio of 5:2) | 70% | Diethyl carbonate + ethyl methyl carbonate (volume ratio of 1:1) | 25% | N-butyl-N-methylpyrroli dine hexafluorophosphate | 5% |
| Example 24 | Na[Cu_{1/9}Ni_{2/9}Fe_{1/3}Mn_{1/3}]O₂ | Sodium hexafluorophosphate | 20% | Diethyl carbonate + ethyl methyl carbonate (volume ratio of 1:1) | 75% | N-butyl-N-methylpyrrolidine hexafluorophosphate | 5% |
| Example 25 | Na[Cu_{1/9}Ni_{2/9}Fe_{1/3}Mn_{1/3}]O₂ | Sodium hexafluorophosphate | 20% | Diethyl carbonate + ethyl methyl carbonate (volume ratio of 1:1) | 75% | N,N-dimethylacetamide | 5% |
| Example 26 | Na[Cu_{1/9}Ni_{2/9}Fe_{1/3}Mn_{1/3}]O₂ | Sodium hexafluorophosphate | 20% | Diethyl carbonate + ethyl methyl carbonate (volume ratio of 1:1) | 75% | Potassium bis(oxalato)borate | 5% |
| Example 27 | Na[Cu_{1/9}Ni_{2/9}Fe_{1/3}Mn_{1/3}]O₂ | Sodium hexafluorophosphate | 20% | Diethyl carbonate + ethyl methyl carbonate (volume ratio of 1:1) | 75% | Antimony trifluoride | 5% |
| Example 28 | ZrO₂-coated Na_{2/3}Ni_{1/6}Mn_{2/3}Cu_{1/9}Mg_{1/18}O₂ | Sodium hexafluorophosphate | 20% | Diethyl carbonate + ethyl methyl carbonate (volume ratio of 1:1) | 75% | N-butyl-N-methylpyrrolidine hexafluorophosphate | 5% |
| Example 29 | ZrO₂-coated Na_{2/3}Ni_{1/6}Mn_{2/3}Cu_{1/9}Mg_{1/18}O₂ | Sodium hexafluorophosphate | 20% | Diethyl carbonate + ethyl methyl carbonate (volume ratio of 1:1) | 75% | N,N-dimethylacetamide | 5% |
| Example 30 | ZrO₂-coated Na_{2/3}Ni_{1/6}Mn_{2/3}Cu_{1/9}Mg_{1/18}O₂ | Sodium hexafluorophosphate | 20% | Diethyl carbonate + ethyl methyl carbonate (volume ratio of 1:1) | 75% | Potassium bis(oxalato)borate | 5% |
| Example 31 | ZrO₂-coated Na_{2/3}Ni_{1/6}Mn_{2/3}Cu_{1/9}Mg_{1/18}O₂ | Sodium hexafluorophosphate | 20% | Diethyl carbonate + ethyl methyl carbonate (volume ratio of 1:1) | 75% | Antimony trifluoride | 5% |
| Comparative example 1 | Carbon-coated sodium iron pyrophosphate | Sodium hexafluorophosphate | 20% | Diethyl carbonate + ethyl methyl carbonate (volume ratio of 1:1) | 80% | / | / |
| Comparative example 2 | Carbon-coated sodium iron pyrophosphate | Sodium hexafluorophosphate | 20% | Diethyl carbonate + fluoroethylene carbonate (volume ratio of 2:1) | 80% | / | / |
| Comparative example 3 | Carbon-coated sodium iron pyrophosphate | Sodium bis(trifluoromethanesulfonyl)imide | 20% | Diethyl carbonate + ethyl methyl carbonate (volume ratio of 1:1) | 80% | / | / |
| Comparative example 4 | Carbon-coated sodium iron pyrophosphate | Sodium bis(fluorosulfonyl)imide | 20% | Diethyl carbonate + ethyl methyl carbonate (volume ratio of 1:1) | 80% | / | / |
| Comparative example 5 | Carbon-coated sodium iron pyrophosphate | Sodium hexafluorophosphate | 2% | Diethyl carbonate + ethyl methyl carbonate (volume ratio of 1:1) | 98% | / | / |
| Comparative example 6 | Carbon-coated sodium iron pyrophosphate | Sodium hexafluorophosphate | 30% | Diethyl carbonate + ethyl methyl carbonate (volume ratio of 1:1) | 70% | / | / |
| Comparative example 7 | Carbon-coated sodium iron pyrophosphate | Sodium bis(trifluoromethanesulfonyl)imide | 50% | Diethyl carbonate + ethyl methyl carbonate (volume ratio of 1:1) | 50% | / | / |
| Comparative example 8 | Carbon-coated sodium iron pyrophosphate | Sodium bis(trifluoromethanesulfonyl)imide + sodium hexafluorophosphate (mass ratio of 5:2) | 70% | Diethyl carbonate + ethyl methyl carbonate (volume ratio of 1:1) | 30% | / | / |
| Comparative example 9 | Na[Cu_{1/9}Ni_{2/9}Fe_{1/3}Mn_{1/3}]O₂ | Sodium hexafluorophosphate | 20% | Diethyl carbonate + ethyl methyl carbonate (volume ratio of 1:1) | 80% | / | / |
| Comparative example 10 | ZrO₂-coated Na_{2/3}Ni_{1/6}Mn_{2/3}Cu_{1/9}Mg_{1/18}O₂ | Sodium hexafluorophosphate | 20% | Diethyl carbonate + ethyl methyl carbonate (volume ratio of 1:1) | 80% | / | / |

**Table 2**

| No. | Electrochemical stability window width (V, 25°C) | Cycles to capacity retention rate of 80% (cycles) (at charge and discharge rate of 1C at 25°C) | Cycles to capacity retention rate of 80% (cycles) (at charge and discharge rate of 1C at 60°C) | Room-temperature storage swelling rate (%) (25°C) | High-temperature storage swelling rate (%) (60°C) |
|---|---|---|---|---|---|
| Example 1 | 4.5 | 850 | 550 | 15 | 20 |
| Example 2 | 4.5 | 650 | 450 | 18 | 26 |
| Example 3 | 4.6 | 700 | 500 | 16 | 23 |
| Example 4 | 4.4 | 850 | 400 | 20 | 27 |
| Example 5 | 4.4 | 500 | 300 | 21 | 30 |
| Example 6 | 4.3 | 600 | 250 | 18 | 30 |
| Example 7 | 4.4 | 550 | 300 | 20 | 27 |
| Example 8 | 4.3 | 600 | 250 | 20 | 31 |
| Example 9 | 4.4 | 500 | 300 | 22 | 28 |
| Example 10 | 4.7 | 800 | 350 | 20 | 29 |
| Example 11 | 4.5 | 500 | 250 | 23 | 32 |
| Example 12 | 4.4 | 500 | 150 | 25 | 34 |
| Example 13 | 4.4 | 400 | 200 | 24 | 30 |
| Example 14 | 4.5 | 650 | 400 | 21 | 28 |
| Example 15 | 4.4 | 600 | 300 | 24 | 32 |
| Example 16 | 4.3 | 500 | 200 | 22 | 30 |
| Example 17 | 4.4 | 750 | 450 | 19 | 24 |
| Example 18 | 4.6 | 800 | 500 | 18 | 25 |
| Example 19 | 4.6 | 750 | 500 | 20 | 24 |
| Example 20 | 4.4 | 700 | 350 | 23 | 30 |
| Example 21 | 4.5 | 850 | 600 | 16 | 21 |
| Example 22 | 4.6 | 900 | 500 | 15 | 25 |
| Example 23 | 4.7 | 1000 | 650 | 14 | 18 |
| Example 24 | 4.5 | 350 | 250 | 21 | 28 |
| Example 25 | 4.4 | 250 | 100 | 25 | 33 |
| Example 26 | 4.3 | 250 | 100 | 26 | 35 |
| Example 27 | 4.4 | 200 | 100 | 28 | 38 |
| Example 28 | 4.5 | 500 | 300 | 19 | 24 |
| Example 29 | 4.4 | 350 | 150 | 24 | 29 |
| Example 30 | 4.3 | 400 | 200 | 22 | 26 |
| Example 31 | 4.4 | 300 | 150 | 21 | 30 |
| Comparative example 1 | 4.3 | 350 | 150 | 29 | 37 |
| Comparative example 2 | 4.4 | 300 | 50 | 31 | 40 |
| Comparative example 3 | 4.3 | 300 | 150 | 28 | 34 |
| Comparative example 4 | 4.3 | 300 | 100 | 26 | 39 |
| Comparative example 5 | 4.2 | 250 | 150 | 30 | 35 |
| Comparative example 6 | 4.3 | 400 | 150 | 24 | 30 |
| Comparative example 7 | 4.4 | 450 | 150 | 22 | 31 |
| Comparative example 8 | 4.5 | 500 | 200 | 21 | 29 |
| Comparative example 9 | 4.3 | 150 | 50 | 36 | 46 |
| Comparative example 10 | 4.3 | 200 | 100 | 31 | 38 |

It can be seen from Table 1 and Table 2 that the electrolyte of the sodium battery with no negative electrode in each of Examples 1 to 31 includes the ester solvent and the additive, where the ester solvent is used as a main solvent of the electrolyte, and the additive is elected from one or more of the ionic liquid additive, the amide compound additive, the inert cation additive, and the alloy additive.

Examples 1 to 9 exhibit more excellent cycling performance and lower amount of gas produced than Comparative example 1, and Examples 10 to 13 exhibit more excellent cycling performance and lower amount of gas produced than Comparative example 2. The ionic liquid additive and the amide compound additive added can further broaden the electrochemical stability window and allow the electrolyte to have more excellent electrochemical stability.

It can be seen from the comparison of Examples 14 and 15 and Comparative examples 3 and 4 that the electrolyte of this application is suitable for different types of sodium salts and can effectively improve the cycling performance of the battery and reduce the amount of gas produced in the battery.

It can be seen from the comparison of Examples 1 and 16 to 19 and Comparative example 1 that when the mass percentage of the additive is 1%-10%, the cycling performance of the battery can be effectively improved, and the amount of gas produced in the battery can be reduced.

It can be seen from the comparison of Examples 20 and 23 and Comparative examples 5 and 8 that the electrolyte of this application is also suitable for electrolyte systems with different concentrations. In the electrolyte systems with different concentration, the electrolyte can improve the cycling performance of the battery, reduce the amount of gas produced, and broaden the electrochemical stability window. Especially in a high-concentration electrolyte system, the electrolyte provided in this application can further improve the performance of the battery based on high cycling performance by improving solvation structures of sodium ions.

It can be seen from Examples 1 to 9 that the ionic liquid additive more significantly improves the cycling performance and storage stability of the battery with no negative electrode. It can be seen from Examples 1 to 4 that N-butyl-N-methylpyrrolidine hexafluorophosphate and tetrabutylphosphonium bis(fluorosulfonyl)imide can more effectively improve the cycling performance and storage stability of the battery with no negative electrode. N-butyl-N-methylpyrrolidine hexafluorophosphate most significantly improves the cycling performance and storage stability of the battery with no negative electrode at room temperature and high temperatures. It can be seen from Examples 9 to 11 that lithium bis(oxalato)borate and potassium bis(oxalato)borate in the inert cation additive better improve the cycling performance and storage stability of the battery with no negative electrode.

It can be seen from the comparison of Examples 24 to 31 and Comparative examples 9 and 10 that the electrolyte provided in this application is suitable for various positive electrode materials, and both polyanions and layered oxides can effectively broaden the electrochemical stability window of the battery and effectively improve the cycling performance and storage stability of the battery. Especially, the layered oxides can effectively improve the electrochemical cycling stability of the battery at high voltages.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for secondary battery, **characterized by** comprising an ester solvent and an additive, wherein the additive comprises one or more of an ionic liquid additive, an amide compound additive, an inert cation additive, and an alloy additive.

2. The electrolyte according to claim 1, **characterized in that** cations of the ionic liquid additive comprise one or more of nitrogen-containing onium ions and phosphorus-containing onium ions, and anions of the ionic liquid additive comprise one or more of halogen ions, phosphate ions, borate ions, and sulfimide anions.

3. The electrolyte according to claim 1 or 2, **characterized in that** the cations of the ionic liquid additive comprise one or more of 1-butyl-3-methylimidazolium, 1-benzyl-3-methylimidazolium, 3-methyl-1-ethoxycarbonyl methylimidazolium, 1-alkyl-3-methylimidazolium, 1-[(trimethylsilyl)methyl]benzotriazolium, N-alkyl-N-methylpiperidinium, 5-azoniaspiro[4.4]nonane, trihexyl(tetradecyl)phosphonium ions, tetrabutylphosphonium ions, and N-butyl-N-methylpyrrolidinium; and optionally, the cations of the ionic liquid additive comprise tetrabutylphosphonium ions or N-butyl-N-methylpyrrolidinium.

4. The electrolyte according to any one of claims 1 to 3, **characterized in that** the anions of the ionic liquid additive comprise one or more of chloride ions, bromide ions, iodide ions, hexafluorophosphate, tetrafluoroborate, dicyanamide anions, bis(fluorosulfonyl)imide anions, and bis(trifluoromethylsulfonyl)imide anions; and optionally, the anions of the ionic liquid additive comprise hexafluorophosphate or bis(fluorosulfonyl)imide anions.

5. The electrolyte according to any one of claims 1 to 4, **characterized in that** the ionic liquid additive comprises one or more of tetrabutylphosphonium hexafluorophosphate, tetrabutylphosphonium bis(fluorosulfonyl)imide, N-butyl-N-methylpyrrolidine hexafluorophosphate, N-butyl-N-methylpyrrolidine bis(fluorosulfonyl)imide, 1-butyl-3-methylimidazole bis(fluorosulfonyl)imide, 1-benzyl-3-methylimidazole bis(fluorosulfonyl)imide, 1-butyl-3-methylimidazole bis(trifluoromethylsulfonyl)imide, and 1-benzyl-3-methylimidazole bis(fluorosulfonyl)imide; and optionally, the ionic liquid additive comprises tetrabutylphosphonium hexafluorophosphate, tetrabutylphosphonium bis(fluorosulfonyl)imide, N-butyl-N-methylpyrrolidine hexafluorophosphate, and N-butyl-N-methylpyrrolidine bis(fluorosulfonyl)imide.

6. The electrolyte according to any one of claims 1 to 5, **characterized in that** the amide compound additive comprises one or more of compounds represented by formula I, formula II, or formula III, 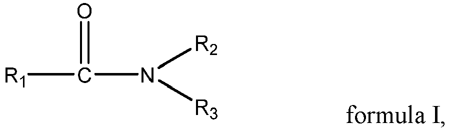 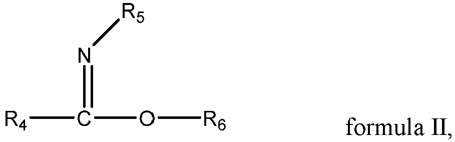 and 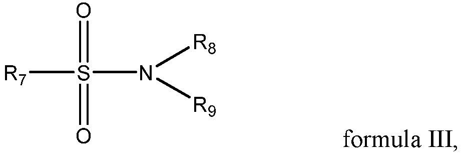 wherein R₁ to R₉ are each independently selected from hydrogen, silyl, keto carbonyl, C₁-C₃ alkyl unsubstituted or substituted with at least one fluorine atom, and aryl unsubstituted or substituted with at least one fluorine atom.

7. The electrolyte according to any one of claims 1 to 6, **characterized in that** the amide compound additive comprises one or more of N,N-dimethylformamide, N,N-dimethylacetamide, N,N-dimethylacetoacetamide, 1,1,1-trifluoro-N,N-dimethylmethanesulfonamide, N,O-bis(trimethylsilyl)trifluoroacetamide, 2,3,6-trifluorobenzenesulfonamide, N,N-dimethyl-4-fluorobenzenesulfonamide, and N-methyl-N-trimethylsilane trifluoroacetamide.

8. The electrolyte according to any one of claims 1 to 7, **characterized in that** the inert cation additive comprises a salt with cations being alkali metal elements or alkaline earth metal elements.

9. The electrolyte according to any one of claims 1 to 8, **characterized in that** the inert cation additive comprises one or more of lithium nitrate, lithium perchlorate, lithium hexafluorophosphate, lithium tetrafluoroborate, lithium bis(oxalato)borate, lithium difluoro(oxalato)borate, lithium bis(fluorosulfonyl)imide, lithium bis(trifluoromethanesulfonyl)imide, potassium hexafluorophosphate, potassium bis(oxalato)borate, potassium difluoro(oxalato)borate, potassium bis(fluorosulfonyl)imide, potassium bis(trifluoromethanesulfonyl)imide, cesium nitrate, cesium hexafluorophosphate, cesium bis(fluorosulfonyl)imide, cesium chloride, cesium bromide, calcium nitrate, strontium nitrate, and barium nitrate.

10. The electrolyte according to any one of claims 1 to 9, **characterized in that** the alloy additive is a compound containing an element of group IVA or group VA.

11. The electrolyte according to any one of claims 1 to 10, **characterized in that** the alloy additive comprises one or more of antimony trifluoride, antimony pentafluoride, tin difluoride, tin tetrafluoride, bismuth trichloride, and silicon dioxide; and optionally, the silicon dioxide is fumed silica.

12. The electrolyte according to any one of claims 1 to 11, **characterized in that** based on a total mass of the electrolyte, a mass percentage of the additive is 1%-10%.

13. The electrolyte according to any one of claims 1 to 12, **characterized in that** the ester solvent comprises one or more of a compound represented by formula IV and a compound represented by formula V, 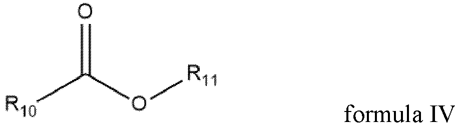 and 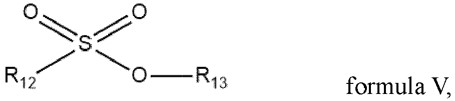
wherein R₁₀ is selected from hydrogen, alkenyl, substituted or unsubstituted C₁₋₆ alkyl, and substituted or unsubstituted C₁₋₆ alkoxy, and R₁₁, R₁₂, and R₁₃ are each independently selected from hydrogen, alkenyl, and substituted or unsubstituted C₁₋₆ alkyl;
R₁₀ and R₁₁ optionally form a cyclic structure with carbon and oxygen connected thereto, wherein the cyclic structure optionally has a double bond, and hydrogen on the cyclic structure is optionally substituted with halogen or C₁₋₃ alkyl; and
R₁₂ and R₁₃ optionally form a cyclic structure with sulfur and oxygen connected thereto.

14. The electrolyte according to any one of claims 1 to 13, **characterized in that** the ester solvent comprises at least one of ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propanesultone, methyl propionate, methyl butyrate, ethyl acetate, ethyl propionate, propyl propionate, and ethyl butyrate.

15. The electrolyte according to any one of claims 1 to 14, **characterized in that** based on the total mass of the electrolyte, a mass percentage of the ester solvent is 20%-70%, optionally 40%-70%.

16. The electrolyte according to any one of claims 1 to 15, **characterized in that** the electrolyte comprises a sodium salt, wherein the sodium salt comprises one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide.

17. The electrolyte according to claim 16, **characterized in that** based on the total mass of the electrolyte, a mass percentage of the sodium salt is 2%-70%, optionally 30%-60%.

18. A secondary battery, **characterized by** comprising the electrolyte according to any one of claims 1 to 17.

19. The secondary battery according to claim 18, **characterized in that** the secondary battery is a sodium metal battery.

20. The secondary battery according to claim 18 or 19, **characterized in that** the secondary battery is a sodium metal battery with no negative electrode.

21. The secondary battery according to any one of claims 18 to 20, **characterized in that** the secondary battery comprises a positive electrode plate, wherein the positive electrode plate comprises a positive electrode active material, and the positive electrode active material comprises one or more of a Prussian blue compound, a polyanionic compound, and a layered oxide.

22. The secondary battery according to claim 21, **characterized in that** a surface of a particle of the positive electrode active material is provided with a coating layer, wherein the coating layer comprises one or more of a carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

23. The secondary battery according to claim 22, **characterized in that** a thickness of the coating layer is 2 nm-1000 nm.

24. The secondary battery according to any one of claims 18 to 23, **characterized in that** the secondary battery comprises a negative electrode plate, wherein the negative electrode plate comprises a negative electrode current collector and a primer layer provided on at least one surface of the negative electrode current collector, and the primer layer comprises one or more of carbon nanotubes, graphite, graphene, silver-carbon composite nanoparticles, and tin-carbon composite nanoparticles.

25. The secondary battery according to claim 24, **characterized in that** the negative electrode current collector comprises at least one of a metal foil, a metal foam current collector, a metal mesh current collector, a carbon felt current collector, a carbon cloth current collector, a carbon paper current collector, and a composite current collector.

26. The secondary battery according to claim 24 or 25, **characterized in that** a surface density of the primer layer is 2 g/m²-50 g/m².

27. The secondary battery according to claim 24 or 25, **characterized in that** a thickness of the primer layer is 1 µm-100 µm.

28. A battery module, **characterized by** comprising the secondary battery according to any one of claims 18 to 27.

29. A battery pack, **characterized by** comprising the secondary battery according to any one of claims 18 to 27 or the battery module according to claim 28.

30. An electric apparatus, **characterized by** comprising at least one of the secondary battery according to any one of claims 18 to 27, the battery module according to claim 28, and the battery pack according to claim 29.
